# EUROPEAN PATENT APPLICATION

(11) **EP 2 939 724 A1**
(43) Date of publication of application: **04.11.2015**
(21) Application number: 13867630.9
(22) Date of filing: 19.12.2013
(51) Int. Cl.: B01D 33/06, B01D 24/38, B01D 33/70, B63B 13/00

(54) **BALLAST WATER TREATMENT DEVICE AND BACK-WASHING METHOD FOR BALLAST WATER TREATMENT DEVICE**

(30) Priority: 27.12.2012 JP 2012284441
(71) Applicant: Sumitomo Electric Industries, Ltd., Osaka 541-0041 (JP)
(72) Inventor: HARADA, Ryoji, Osaka-shi Osaka 554-0024 (JP); UEYAMA, Munetsugu, Osaka-shi Osaka 554-0024 (JP); KANAZAWA, Shinichi, Osaka-shi Osaka 554-0024 (JP); YAHAGI, Satoshi, Osaka-shi Osaka 554-0024 (JP); OZAWA, Isao, Osaka-shi Osaka 554-0024 (JP)
(74) Representative: Boult Wade Tennant
(86) International application number: PCT/JP2013/084035
(87) International publication number: WO 2014/103854

(57) **Abstract**

A ballast water treatment apparatus includes a cylindrical pleated filter that is rotatably held about an axis of a cylinder, a driving mechanism that rotates the pleated filter, an untreated water nozzle that ejects untreated water toward an outer circumferential surface of the pleated filter, a case that is provided so as to surround the pleated filter and that includes an outer cylindrical portion including a nozzle opening of the untreated water nozzle therein, a filtered water flow path that guides filtered water that has permeated through the pleated filter from the inside of the cylinder of the pleated filter to the outside of the case, and a discharge flow path that discharges discharged water that has not been filtered by the pleated filter to the outside of the case. The ballast water treatment apparatus further includes a reverse cleaning mechanism that supplies cleaning water to the inside of the cylinder of the pleated filter through the filtered water flow path.

## Description

### Technical Field

The present invention relates to an apparatus used in a system for treating ballast water stored in a ship, and a method for cleaning a filter provided in the apparatus.

### Background Art

Treatment of ballast water carried in ships has become an issue in recent years. Ballast water is seawater carried in a ship to provide safe voyage even when the ship is empty of cargo. Various methods for removing, killing, or inactivating microbes by purifying ballast water have been developed. Methods using filtration for the purpose of removing relatively large microbes have also been developed. For example, PTL 1 describes a ballast water treatment apparatus using a filtration film, the apparatus being filed by the applicant of the present application. According to PTL 1, an apparatus for performing filtration while cleaning a filter can be provided by ejecting seawater, which is a target of filtration, toward an outer surface of a cylindrically shaped, pleated filter while rotating the pleated filter.

### Citation List

### Patent Literature

PTL 1: Japanese Patent No. 4835785

### Summary of Invention

### Technical Problem

In the case of seawater desalination, the use of brackish water/seawater for purposes such as ballast water, or the treatment of sewage water, human sewage, industrial wastewater, or the like, a preliminary filtration treatment for removing foreign matter, contaminants, and microbes in water is necessary. The inventors of the present application have been examining the application of a pleated filter to such filtration. In this case, it is necessary to filter a large amount of water in the shortest possible time. However, in general, the operation at a large scale/high flow rate causes a technical problem in that a decrease in the amount of treatment or the filtration function due to clogging at an early stage is easily caused.

The apparatus disclosed in PTL 1 is a filtering apparatus in which a cylindrical filter is installed in a tubular case and a liquid flowing from the outside to the inside of the cylindrical filter is collected as a filtrate. By ejecting a filtering target liquid from a nozzle provided on a side face of the tubular case onto a part of a filtering surface of the filter, filtered products deposited on a surface of the filter are cleaned to recover the permeation flux, and the filtered products that have been washed out are discharged from a filtration front chamber. With this structure, a stable filtration state is continuously maintained. An important factor for stably maintaining continuous filtration of such a system is the cleaning effect obtained by the ejection of the filtering target liquid onto the filtering surface of the filter. In order to efficiently and effectively clean the entire filter by changing a cleaning region of the filter with time, the cylindrical filter is rotated during filtration by driving a motor or the like, thus continuously and periodically changing the position to which the ejection from the ejection nozzle is applied.

However, it was confirmed that, even in such an apparatus, during continuous filtration for a certain period of time or longer, clogging of the filter gradually proceeds and the filter need to be changed in some cases. Accordingly, an object of the present invention is to provide a method for cleaning a ballast water treatment apparatus, with which clogging of a filter is effectively cleaned and the filter can be used for a longer time without changing the filter, and to provide a ballast water treatment apparatus for realizing the same.

### Solution to Problem

In order to address the above circumstances, the inventors of the present application examined the use of generally known reverse cleaning as a method for cleaning a filter, and arrived at the invention of the present application in which a cylindrical pleated filter can be efficiently cleaned.

Specifically, an invention of the present application 1 provides
(1) a ballast water treatment apparatus including a cylindrical pleated filter that is rotatably held about an axis of a cylinder, a driving mechanism that rotates the pleated filter, an untreated water nozzle that ejects untreated water toward an outer circumferential surface of the pleated filter, a case that is provided so as to surround the pleated filter and that includes an outer cylindrical portion including a nozzle opening of the untreated water nozzle therein, a filtered water flow path that guides filtered water that has permeated through the pleated filter from the inside of the cylinder of the pleated filter to the outside of the case, and a discharge flow path that discharges discharged water that has not been filtered by the pleated filter to the outside of the case, in which the ballast water treatment apparatus includes a reverse cleaning mechanism that supplies cleaning water to the inside of the cylinder of the pleated filter through the filtered water flow path.

Also provided is a reverse cleaning method for a ballast water treatment apparatus, the reverse cleaning method being used for a ballast water treatment apparatus having a structure in which a cylindrical pleated filter that is rotatably held about an axis of a cylinder is used as a filtration film, and in a state of a filtering operation, untreated water is filtered from an outer circumferential surface side of the pleated filter toward an inner side of the cylinder. The reverse cleaning method includes, in a state where the filtering operation is stopped and the pleated filter is rotated, supplying pressurized cleaning water to the inner side of the cylinder of the pleated filter, and permeating the cleaning water from the inner side of the cylinder of the pleated filter toward the outer circumferential surface side of the pleated filter.

### Advantageous Effects of Invention

According to the invention, it is possible to provide a method for cleaning a ballast water treatment apparatus, with which clogging of a filter is effectively cleaned and the filter can be used for a longer time without changing the filter, and to provide a ballast water treatment apparatus for realizing the same.

### Brief Description of Drawings

[Fig. 1] Figure 1 is a view illustrating a typical structural example of a ballast water treatment apparatus according to the present invention.
[Fig. 2] Figure 2 is a schematic longitudinal cross-sectional view illustrating a structural example of a filtering apparatus part of the ballast water treatment apparatus shown in Fig. 1.
[Fig. 3] Figure 3 is a view that schematically shows an A-A cross section of Fig. 2.
[Fig. 4] Figure 4 is a perspective view illustrating a structure of a pleated filter used in the present invention.
[Fig. 5] Figure 5 is a diagram illustrating an overall structure of a ballast water treatment system using a ballast water treatment apparatus.

### Reference Signs List

- 10, 11, 101: pleated filter
- 12: filtering apparatus
- 13: ultraviolet irradiation device
- 14: tank
- 20: case
- 21: pump
- 31, 32, 33, 34, 35, 36: pipe
- 40: cleaning water tank
- 41,42: pipe
- 51, 52, 53, 54, 55, 56: valve
- 61, 62, 63, 64, 65: pipe
- 70, 170: chemical inlet
- 102: untreated water nozzle
- 20, 103: case
- 106: untreated water flow path
- 107: filtered water flow path
- 108: discharge flow path
- 121: nozzle opening
- 131: outer cylindrical portion
- 132: lid portion
- 133: bottom portion
- 140: central pipe
- 141: water intake hole
- 30, 190: motor
- 191: motor cover

### Description of Embodiments

### [Description of embodiments of the invention of the present application]

First, the content of the invention of the present application will be listed and described.

The invention of the present application provides (1) a ballast water treatment apparatus including a cylindrical pleated filter that is rotatably held about an axis of a cylinder, a driving mechanism that rotates the pleated filter, an untreated water nozzle that ejects untreated water toward an outer circumferential surface of the pleated filter, a case that is provided so as to surround the pleated filter and that includes an outer cylindrical portion including a nozzle opening of the untreated water nozzle therein, a filtered water flow path that guides filtered water that has permeated through the pleated filter from the inside of the cylinder of the pleated filter to the outside of the case, and a discharge flow path that discharges discharged water that has not been filtered by the pleated filter to the outside of the case, in which the ballast water treatment apparatus includes a reverse cleaning mechanism that supplies cleaning water to the inside of the cylinder of the pleated filter through the filtered water flow path.

The ballast water treatment apparatus is characterized by including a reverse cleaning mechanism even in an apparatus in which filtered products deposited on a surface of a cylindrical pleated filter are cleaned in parallel with filtration by ejecting untreated water, which is a target of filtration, from a nozzle while rotating the pleated filter and a stable filtration state can be maintained. In particular, in a ballast water treatment apparatus installed in a ship and used in a situation where voyage is repeated, it is extremely difficult to change a filter as compared with ground installation-type filtering equipment. According to the invention of the present application, a longer-term filtering operation can be realized, and the equipment cost and the maintenance cost can be significantly reduced by further extending the exchange period of the filter.

Note that the term "reverse cleaning" refers to a cleaning method in which cleaning water is passed through a filter in a direction opposite to a normal filtration state. The term "reverse cleaning mechanism" generically refers to a structure and additional equipment for realizing such cleaning.
(2) The reverse cleaning mechanism is preferably capable of supplying the cleaning water in a state where the pleated filter is rotated by operating the driving mechanism. By allowing cleaning water to pass from the inside of the cylinder in an outward direction while rotating a filter, a centrifugal force acts on filtered products adhering to the outer circumferential surface of the filter, and thus a cleaning capability of the filter can be enhanced in combination with the permeation pressure of the cleaning water.
(3) The reverse cleaning mechanism preferably includes a pressurization tank that holds the cleaning water in a pressurized state, and a discharge valve for discharging, from the case, the cleaning water that has permeated from the inside of the cylinder of the pleated filter to the outer circumferential surface side of the pleated filter. By opening the discharge valve to permeate cleaning water stored in the pressurization tank in a pressurized state into the filter within a short time, cleaning with a high cleaning performance and a short cleaning time can be realized. The discharge valve is provided in order to discharge cleaning water that flows from the filtered water flow path in an opposite direction and that permeates through the filter in the direction opposite to the filtration. The discharge valve is opened and closed in cooperation with other valves for switching a filtering operation and a cleaning operation. In addition, since the reverse cleaning mechanism is a simple mechanism using the pressurization tank as described above, the reverse cleaning mechanism can be installed even in a narrow ship. Furthermore, a pressurizing function which is usually provided in a ship can be used, and a cleaning capability can be obtained at a low cost.
(4) The pressurization tank is more preferably a tank that stores part of the filtered water as the cleaning water. By providing the pressurization tank at a halfway position of the filtered water flow path so as to be branched from the filtered water flow path and storing a certain amount of filtered water that has already been filtered, the filtered water can be used as the cleaning water. The storage and discharge of the cleaning water can be switched by appropriately providing a valve in the flow path.
(5) The discharge valve may be provided at a halfway position of an untreated water flow path for supplying the untreated water to the untreated water nozzle or at a halfway position of the discharge flow path. This structure is suitable for ensuring a discharge flow path and controlling opening and closing of the discharge valve together with other valves.
(6) The reverse cleaning mechanism is preferably a mechanism that is capable of supplying the cleaning water to the inside of the pleated filter at a pressure of 0.1 MPa or more and 1 MPa or less. When the pressure is less than 0.1 MPa, the pressure is insufficient for separating filtered product from the surface of the filter and it is difficult to obtain a sufficient cleaning performance. When the pressure exceeds 1 MPa, a pressure in a direction in which the cylinder of the cylindrical pleated filter is expanded from the inside to the outside of the cylinder becomes excessively high. Consequently, tear of the filter and breakage of a mechanism that fixes the filter easily occur. The pressure is more preferably 0.2 MPa or more and 0.6 MPa or less and still more preferably 0.4 MPa or more and 0.5 MPa or less.
(7) The case preferably further includes therein a chemical inlet through which a cleaning chemical for cleaning the pleated filter is poured. It was found that, although a long-term filtering operation can be realized by conducting reverse cleaning, there are substances that cannot be removed by such mechanical cleaning and that are deposited on the surface of the filter. Accordingly, in order to extend the lifetime of the filter for a longer time, cleaning with a chemical is preferably used in combination. Cleaning of a filter with a chemical is a cleaning method that has hitherto been used in various filters. Sodium hypochlorite is preferably used as the chemical. It has been confirmed that chlorine effectively acts. Chlorine generated by electrolysis of seawater or chlorine dioxide may also be used. An acid such as citric acid may also be used.

The present application further provides a reverse cleaning method for a ballast water treatment apparatus, the method using the apparatus described above. Specifically, provided is (8) a reverse cleaning method for a ballast water treatment apparatus, the reverse cleaning method being used for a ballast water treatment apparatus having a structure in which a cylindrical pleated filter that is rotatably held about an axis of a cylinder is used as a filtration film, and in a state of a filtering operation, untreated water is filtered from an outer circumferential surface side of the pleated filter toward an inner side of the cylinder. The reverse cleaning methods includes, in a state where the filtering operation is stopped and the pleated filter is rotated, supplying pressurized cleaning water to the inner side of the cylinder of the pleated filter, and permeating the cleaning water from the inner side of the cylinder of the pleated filter toward the outer circumferential surface side of the pleated filter.

According to this method, more effective cleaning can be realized by further conducting reverse cleaning even in an apparatus in which a stable filtration state can be maintained by cleaning filtered products in parallel with filtration, the filtered product being deposited on a surface of a filter. By passing cleaning water from the inside of the cylinder in the outward direction while rotating a filter, a centrifugal force acts on filtered products adhering to the outer circumferential surface of the filter, and thus the cleaning capability can be enhanced in combination with the permeation pressure of the cleaning water. In particular, in a ballast water treatment apparatus installed in a ship and used in a situation where voyage is repeated, it is extremely difficult to change a filter as compared with ground installation-type filtering equipment. By using the method of the present application, a longer-term filtering operation can be realized, and the equipment cost and the maintenance cost can be significantly reduced by further extending the exchange period of the filter.

Furthermore, (9) the cleaning water is preferably intermittently supplied, and relationships of B ≥ A × 10⁻³ and 0.5 ≤ C ≤ 10 are preferably satisfied where A represents an effective filter area (m²) of the pleated filter, B represents an amount (m³) of cleaning water that is allowed to flow at one time, and C represents a time (sec) during which the cleaning water flows at the one time.

When an effective filter area of a pleated filter is represented by A (m²), the phrase "A x 10⁻³ (m³) of water is allowed to flow through the entire surface of the filter" means that cleaning water permeates through each part of the filter by 1 mm. That is, ideally, filtered products adhering to a surface of a filter can be separated from the surface of the filter by 1 mm. When the amount of cleaning water is less than A x 10⁻³ (m³), a sufficient cleaning effect is not obtained. Furthermore, the shorter the time during which the above amount of cleaning water flows, the larger the impact applied to the filtered products adhering to the filter can become. In the case where the time during which the cleaning water flows in an amount of B is represented by C (second: sec), when the time C exceeds 10 seconds, a sufficient force for separating the filtered products cannot be obtained. When the time C is less than 0.5 seconds, the impact applied to the filter is large and the possibility of damage of the filter increases. The time C is preferably 0.5 seconds or more and 3 seconds or less, and more preferably 0.5 seconds or more and 2 seconds or less.
(10) The cleaning water is preferably pressurized at a pressure of 0.1 MPa or more and 1 MPa or less. When the pressure is less than 0.1 MPa, the pressure is insufficient for separating the filtered products from the surface of the filter and it is difficult to obtain a sufficient cleaning performance. When the pressure exceeds 1 MPa, a pressure in a direction in which the cylinder of the cylindrical pleated filter is expanded from the inside to the outside of the cylinder becomes excessively high. Consequently, tear of the filter and breakage of a mechanism that fixes the filter easily occur. The pressure is more preferably 0.2 MPa or more and 0.6 MPa or less, and still more preferably 0.4 MPa or more and 0.5 MPa or less.
(11) Before the reverse cleaning method is performed, chemical cleaning may be conducted by immersing the pleated filter in a cleaning chemical for a certain period of time. In this reverse cleaning method for a ballast water treatment apparatus, a higher cleaning effect can be obtained. This is because, after clogged substances adhering to the pleated filter are chemically decomposed by the chemical and become easily broken, the physical flow of the water for reverse cleaning removes the clogged substances easily and efficiently.

### [Details of embodiments of the invention of the present application]

A structure of a ballast water treatment apparatus according to the present invention will now be described with reference to the drawings. It is to be understood that the present invention is not limited to these examples but is defined by the claims described below. It is intended that the scope of the present invention includes equivalents of the claims and all modifications within the scope of the claims.

### (Ballast water treatment system)

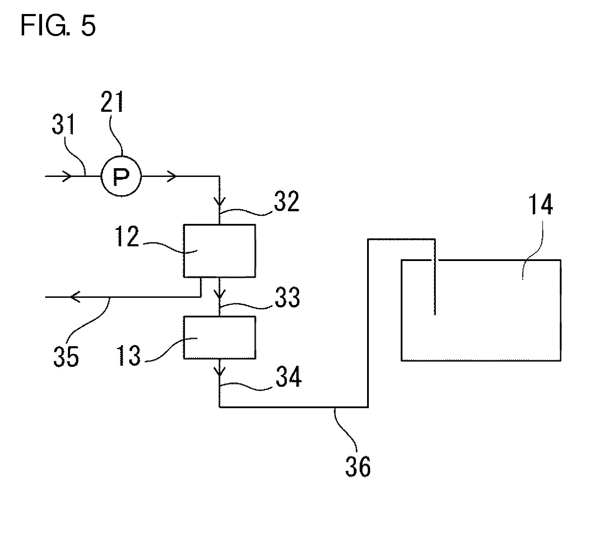

An example of an overall structure of a ballast water treatment system using a ballast water treatment apparatus will be describe with reference to Fig. 5. In this system, seawater, which is untreated water, taken from a pipe 31 with a pump 21 is treated and then stored as ballast water in a tank 14. The untreated water fed to a pipe 32 is filtered by a filtering apparatus 12. Filtered water passes through a pipe 33 and is fed to a killing means (which is not essential) such as an ultraviolet irradiation device 13. Discharged water that has not been filtered in the filtering apparatus 12 is led to the outside of the apparatus through a pipe 35. Seawater that has been subjected to a killing treatment is fed to the tank 14 through pipes 34 and 36.

### (Filtering apparatus)

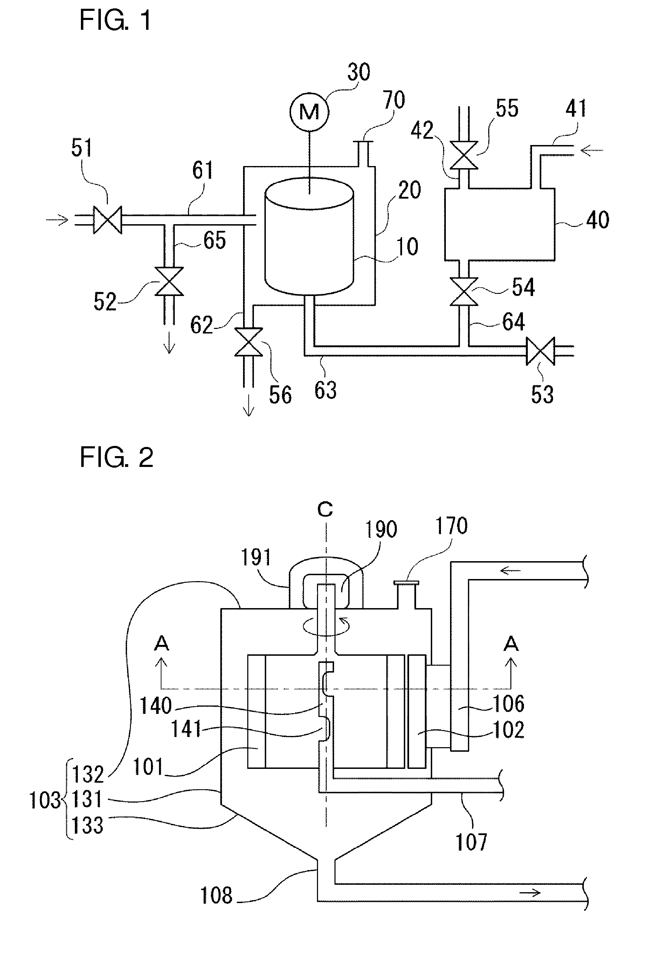

The structure of a ballast water treatment apparatus according to an embodiment of the present invention will be described with reference with the drawings. Figure 1 is a view illustrating a structural example of a ballast water treatment apparatus serving as the filtering apparatus 12 in the ballast water treatment system described with reference to Fig. 5. First, a basic operation of a ballast water treatment will be described. Untreated water passes through a pipe 61 provided with a valve 51 and is supplied to the inside of a case 20. A cylindrically shaped, pleated filter 10 is provided in the case 20. The pleated filter 10 can be rotated about an axis of the cylinder by a motor 30. The untreated water is filtered from the outside of the cylinder of the pleated filter 10 toward the inside of the cylinder. Filtered water after the filtration is led from the inside of the cylinder to a pipe 63. Discharged water that has not been filtered is discharged from a pipe 62 to the outside through a valve 56. The filtered water is supplied from the pipe 63 to a ballast water tank through a valve 53.

The apparatus shown in Fig. 1 includes a reverse cleaning mechanism for performing reverse cleaning of the pleated filter 10 in addition to the components used in the ordinary filtration (ballast water treatment) function described above. The reverse cleaning mechanism includes a cleaning water tank 40, valves 54 and 55, and a pipe 41.

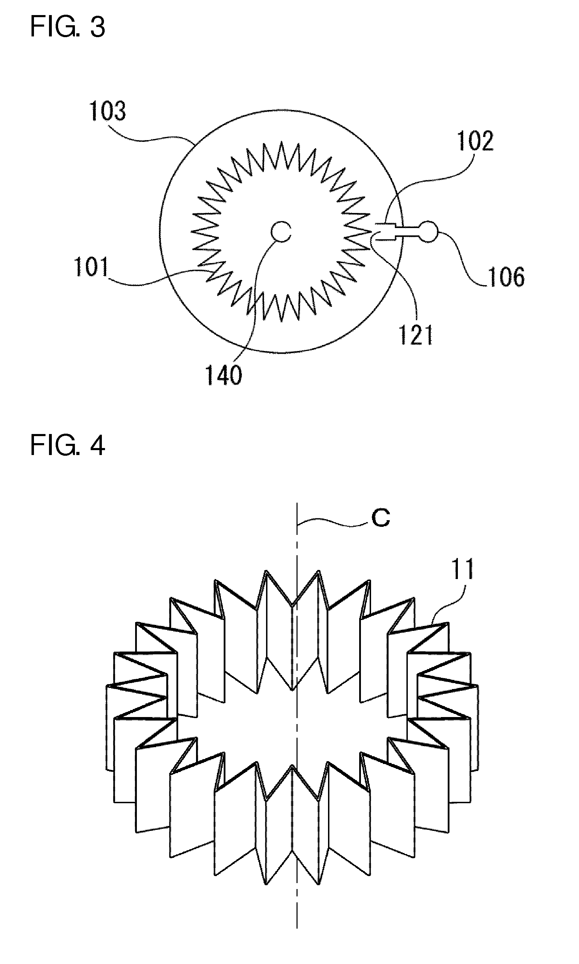

A specific structural example of the filtering apparatus will be described with reference to Figs. 2 and 3. Figures 2 and 3 illustrate a part of an apparatus for treating ballast water for a ship, according to an embodiment of the present invention. Figure 2 is a schematic view showing a structure of a vertical cross section including an axis line. Figure 3 is a schematic view showing a structure of a horizontal A-A cross section in Fig. 2. A cylindrically shaped, pleated filter 101 is arranged so as to surround an axis line, which serves as the center of rotation, and is rotatably attached about a central pipe 140 (which does not rotate and) which is arranged in the center. Upper and lower surfaces of the cylinder of the pleated filter are sealed in a watertight manner. The rotatable attachment structure also needs to have a watertight structure. However, the attachment structure is not particularly limited, and a known structure may be used. A case 103 is provided so as to cover the whole filter. The case 103 incudes an outer cylindrical portion 131, a lid portion 132, and a bottom portion 133. A discharge flow path 108 is provided on the bottom portion 133. An untreated water flow path 106 for introducing seawater as untreated water into the case 103 and an untreated water nozzle 102 are provided. The untreated water nozzle 102 is provided to extend from the untreated water flow path 106 so as to have a nozzle opening 121 thereof in the outer cylindrical portion 131 of the case 103, and is configured so that untreated water flows toward an outer circumferential surface of the pleated filter. A motor 190 is provided on the central axis of the pleated filter for the purpose of the rotation of the pleated filter. The motor 190 is housed in a motor cover 191 and is driven by an electric power supplied from a driving control unit (not shown).

In this example, the untreated water ejected from the untreated water nozzle is applied to the outer circumferential surface of the pleats of the pleated filter, and a cleaning effect of the pleated filter is obtained by the pressure of the untreated water. The untreated water that is not filtered and suspensoid settled in the case are sequentially discharged from the discharge flow path on the bottom portion of the case. This point that filtration is performed while constantly and continuously discharging suspensoid and residual untreated water as described above is also a feature of this apparatus. This feature is advantageous for reliably achieving an amount of treatment required for ballast water, namely, 10 to 20 ton/hour and furthermore 100 ton/hour. Although valve and the like are not shown in the discharge flow path in the drawing, devices necessary for maintenance and flow rate control may be provided. The filtered water filtered by the pleated filter 101 is guided to a filtered water flow path 107 through a water intake hole 141 provided in the central pipe 140 in the filter, and is discharged to the outside of the case.

An example of an apparatus that performs a treatment at a flow rate of 100 ton/hour includes a pleated filter having an outer diameter of 700 mm, a length in the axial direction of 320 mm, a height in an effective area of 280 mm, a pleat depth of 70 mm, and a number of pleats of 420. The nozzle opening 121 of the untreated water nozzle 102 preferably has a rectangular opening.

### (Structure of pleated filter)

Figure 4 is a schematic perspective view illustrating a typical structure of a pleated filter as an embodiment of the present invention. A pleated filter 11 is obtained by folding a flat strip-shaped base so as to have alternating protrusions and recesses, a so-called pleated shape, and connecting ends of the base to form a cylindrical shape. A porous resin sheet is used as the base of the filer. Examples of the base that can be used include porous structures such as a stretched porous body, a porous body by phase separation, and a non-woven cloth which are composed of a material such as polyester, nylon, polyethylene, polypropylene, polyurethane, polytetrafluoroethylene (PTFE), or polyvinylidene fluoride (PVdF). For the purpose of conducting a high-flow rate treatment, a non-woven cloth composed of a polyester such as polyethylene terephthalate is particularly suitably used.

### (Reverse cleaning method)

A reverse cleaning method will be described with reference to Fig. 1 again. First, cleaning water is prepared. In the normal operation of the ballast water treatment described above, that is, in the filtering operation, the valves 51, 56, and 53 are in an open state and the valves 52 and 54 are in a closed state. When the valve 55 provided in the pipe 42 for releasing the pressure in an upper portion of the cleaning water tank 40 is made to be in an open state and the valve 54 provided in the pipe 64 branched from the pipe 63 is made to be in an open state, filtered water flows into the cleaning water tank 40 and is stored in the tank. When a required amount of cleaning water is stored, the valve 54 is made to be in a closed state. A method in which filtered water is used as cleaning water has been described. Alternatively, for example, tap water or the like may be introduced into the cleaning water tank 40 by another means without using filtered water.

A description will be made of a procedure for conducting reverse cleaning in a state where cleaning water is prepared. The valves 51, 52, 56, and 53 are made to be in a closed state and the normal filtering operation is stopped. The value 54 is made to be in an open state and the value 55 is made to be in a closed state. In this state, the case 20 of the filtering apparatus and the cleaning water tank 40 are connected to each other through the pipe 63, and all the other flow paths are closed. Here, a pressure is applied to the cleaning water by supplying compressed air or the like to the pipe 41 serving as a pressuring pipe. Alternatively, a pressure may be applied in a state where the valve 54 is closed, and the valve 54 may then be opened. The entire inside of the case 20, the pipe 63, and the cleaning water tank 40 is maintained in a pressurized state. Next, the valve 52 is opened (made to be in an open state). Consequently, the cleaning water is supplied from the cleaning water tank 40, passes through the pipe 63, permeates through the pleated filter 10, and is then discharged from the case 20 to the outside through the pipes 61 and 65 at one time. Specifically, the cleaning water flows through the pleated filter 10 serving as a filtration film in a direction opposite to filtration within a short time. As a result, substances, for example, adhering to the outer circumferential surface of the pleated filter are removed from the outer circumferential surface of the pleated filter, and the pleated filter is cleaned. Instead of opening the valve 52, the valve 56 may be opened so that the discharged water after cleaning is discharged from the pipe 62.

After the cleaning water stored in the cleaning water tank 40 is used in the reverse cleaning by the application of pressure through the above operation, the valves 51, 53, and 56 are made to be in an opened state and the valves 52 and 54 are made to be in a closed state to return to the normal filtering operation. In this case, by opening the valves 54 and 55, cleaning water can be stored again in the cleaning water tank 40, and the cleaning operation can be repeated. In the cleaning operation, the operation of the motor 30 may be stopped. However, a higher cleaning effect can be obtained by conducting the reverse cleaning while rotating the pleated filter. This is because a centrifugal force due to the rotation is applied to filtered products adhering to the outer circumferential surface of the cylindrical pleated filter, and the filtered products are more easily removed by the centrifugal force in addition to the pressure of the cleaning water applied from the inside of the cylindrical pleated filter. This is an advantage particular to the structure of the apparatus in which reverse cleaning can be conducted in a rotating state, and an effective cleaning method is provided. Furthermore, in addition to the rotation, vibrations may be applied to the whole pleated filter. Also in this case, an increase in the cleaning effect can be expected.

### (Chemical cleaning)

Referring to Fig. 1, a chemical inlet 70 for a chemical is provided on a lid portion of the case 20. In Fig. 2, a chemical inlet 170 is similarly provided on a lid portion 132. Although a long-term filtering operation can be realized by conducting the reverse cleaning, there may be substances that gradually deposit on the surface of the filter and that cannot be removed by such mechanical cleaning. In order to extend the lifetime, which is the use time, of the filter cleaning with a chemical is preferably used in combination.

Chemical cleaning can be conducted by using such a chemical inlet by the following procedure. The procedure will be described with reference to Fig. 1. First, the filtering operation and the operation of reverse cleaning are stopped. The rotation of the pleated filter 10 by the motor 30 may be stopped, or the pleated filter 10 may be in a rotating state. All the valves are made to be in a closed state, and a state where untreated water or filtered water remains in the case 20 and the pleated filter 10 is immersed in water is maintained. In this state, a chemical for cleaning is poured from the chemical inlet. In the case where the pleated filter 10 has already been in a rotating state, the rotating state is maintained as it is. In the case where the pleated filter 10 is in a stopped state, the pleated filter 10 is made to be in a rotating state by rotating the motor 30. In this state, the ballast water treatment apparatus is maintained for a certain period of time until the chemical entirely spreads and the outer circumferential surface of the pleated filter is sufficiently cleaned. Subsequently, the value 56 is opened to discharge water in the case 20, the water containing the chemical. If necessary, a neutralizing liquid may be further poured before the discharge of water, or a treatment such as neutralization may be performed as a post-treatment of the discharge of water depending on the type of chemical used.

### (Experimental example)

In order to confirm the effect of reverse cleaning, the following experiment was conducted. A ballast water treatment apparatus having the structure shown in Fig. 2 and including a material and having dimensions described below was used. Regarding the pleated filter, a polyethylene terephthalate non-woven cloth (trade name: AXTAR™ G2260-1S BK0, manufactured by Toray Industries, Inc.) was used as a base. The pleated filter has an outer diameter of 700 mm, a length in the axial direction of 320 mm, a height in an effective area of 280 mm, a pleat depth of 70 mm, and a number of pleats of 420. The effective area of the pleated filter is about 12 m². The volume of the case is about 300 L (liters). The nozzle opening is a quadrangular opening having a long side in a direction of the length of the pleats and a short side in a direction of the gap between the pleats. Normal seawater (salinity concentration: 2% to 4%, turbidity: 1 to 1,000 NTU (Nephelometric Turbidity Units)) collected in Imari city, Saga prefecture was used as seawater, i.e., untreated water. With this apparatus, a flow rate of about 250 ton/hour is obtained in a normal filtering operation.

In the apparatus configuration shown in Fig. 1, a tank having a volume of 100 L (capable of storing 100 L of cleaning water) was used as the cleaning water tank 40. Note that the tank is preferably small in order to realize particularly a reduction in size of the apparatus installed in a ship. In order to realize both sufficient cleaning capability and a reduction in size of the tank, the volume of cleaning water used at one time may be about 50 L (30 to 70 L). The valve 54 was opened and filtered water was stored as cleaning water. In a state where 100 L of cleaning water was prepared in the tank, the valves 51, 52, 56, and 53 were made to be in a closed state, the valve 54 was made to be in an open state, and the valve 55 was made to be in a closed state. In this state, the case 20 of the filtering apparatus was connected to the cleaning water tank 40 through the pipe 63, and all the other flow paths were closed. Here, in a state where compressed air of 0.5 MPa was connected to the pipe 41 serving as a pressuring pipe, the valve 52 was opened (made to be in an open state). Consequently, the cleaning water was supplied from the cleaning water tank 40, passed through the pipe 63, permeated through the pleated filter 10, and was then discharged from the case 20 to the outside through the pipes 61 and 65 at one time. The discharge time as a result of the operation of the valve was about 0.2 to 2 seconds. The cleaning can be similarly performed by opening the valve 56 instead of opening the valve 52. During the filtering operation and during the reverse cleaning, the number of revolutions of the pleated filter was the same, namely, 95 rpm.

After reverse cleaning was performed by the above operation, the valves 51, 53, and 56 were made to be in an open state and the valves 52 and 54 were made to be in a closed state, thus returning to the normal filtering operation. Here, filtered water was again stored as cleaning water. At the time when about 100 L of cleaning water was stored, reverse cleaning was performed. This operation was repeated and reverse cleaning was successively performed ten times.

The difference between a water pressure of untreated water and a water pressure of filtered water during the filtering operation was measured as a differential pressure. The degree of clogging of the pleated filter was determined on the basis of an increase in the differential pressure. A differential pressure of about 5 kPa at the initial stage of the filtering operation was increased by about 1 to 2 kPa after the filtering operation was performed for about eight hours. By performing the above reverse cleaning at this time, the differential pressure was substantially recovered and the effect of the reverse cleaning could be confirmed. Furthermore, it was found that in the case where the reverse cleaning was performed while continuing the rotation of the pleated filter, a high cleaning effect could be obtained compared with the case where the reverse cleaning was performed while stopping the rotation. In the case where reverse cleaning was not performed, the differential pressure was significantly increased to 10 kPa or more after the filtering operation was performed for about 25 to 30 hours. Consequently, the normal filtering operation could not be performed. In contrast, filtering operation until 78 hours could be realized by repeating the above reverse cleaning every about eight hours. Specifically, the differential pressure exceeded 10 kPa after 78 hours.

Next, confirmation regarding chemical cleaning was conducted. After the reverse cleaning was repeated as described above, the operation of the pleated filter whose differential pressure had increased was stopped and chemical cleaning was conducted. A commercially available sodium hypochlorite (NaClO) solution containing sodium hydroxide and a surfactant was used. Sodium hypochlorite in a concentration of 6% was poured in the case of the filtering apparatus so that the concentration became about 500 ppm. The cleaning was conducted for one hour while the pleated filter was rotated. Subsequently, the chemical was discharged and fresh seawater was poured to rinse the pleated filter. In this example, since the concentration was 500 ppm, the cleaning was conducted for one hour. However, the cleaning effect varies depending on the concentration. For example, when the solution is diluted to 50 ppm, the same effect can be obtained by performing the immersion for about 12 hours. Although the rotation of the pleated filter may be stopped, the contaminants are more easily removed from the surface of the pleated filter when the pleated filter is in a rotating state.

By the confirmation after cleaning, the differential pressure could be substantially recovered to the initial state, and the normal filtering operation could be started again. It was also confirmed that cleaning could be more effectively performed by conducting the reverse cleaning once immediately after the chemical cleaning. By adding the chemical cleaning once relative to about 5 to 10 times of the reverse cleaning, the pleated filter can be used for a significantly long time without changing the pleated filter.

Furthermore, it was also confirmed that, also in the case where the pleated filter is dry in a stopped state after the filtering operation, the method of the present application is advantageous. When the pleated filter dries, filtered products adhering to the surface strongly adhere to the base of the pleated filter. Accordingly, in the case where the chemical cleaning is merely performed and the filtering operation is then started, the differential pressure may not be sufficiently decreased. Specifically, the differential pressure was 6 kPa before the stop of the filtering operation, and became about 10 kPa after drying. Even when the chemical cleaning was performed, the differential pressure could be merely recovered to 7 kPa. Also in this case, by performing the reverse cleaning subsequent to the chemical cleaning, a high cleaning effect could be obtained and the differential pressure was recovered to 6 kPa. Thus, the normal filtering operation could be started.

## Claims

1. A ballast water treatment apparatus comprising:
a cylindrical pleated filter that is rotatably held about an axis of a cylinder;
a driving mechanism that rotates the pleated filter;
an untreated water nozzle that ejects untreated water toward an outer circumferential surface of the pleated filter;
a case that is provided so as to surround the pleated filter and that includes an outer cylindrical portion including a nozzle opening of the untreated water nozzle therein;
a filtered water flow path that guides filtered water that has permeated through the pleated filter from the inside of the cylinder of the pleated filter to the outside of the case; and
a discharge flow path that discharges discharged water that has not been filtered by the pleated filter to the outside of the case,
wherein the ballast water treatment apparatus includes a reverse cleaning mechanism that supplies cleaning water to the inside of the cylinder of the pleated filter through the filtered water flow path.

2. The ballast water treatment apparatus according to Claim 1, wherein the reverse cleaning mechanism is capable of supplying the cleaning water in a state where the pleated filter is rotated by operating the driving mechanism.

3. The ballast water treatment apparatus according to Claim 1 or 2, wherein the reverse cleaning mechanism includes a pressurization tank that holds the cleaning water in a pressurized state, and a discharge valve for discharging, from the case, the cleaning water that has permeated from the inside of the cylinder of the pleated filter to the outer circumferential surface side of the pleated filter.

4. The ballast water treatment apparatus according to Claim 3, wherein the pressurization tank is a tank that stores part of the filtered water as the cleaning water.

5. The ballast water treatment apparatus according to Claim 3, wherein the discharge valve is provided at a halfway position of an untreated water flow path for supplying the untreated water to the untreated water nozzle or at a halfway position of the discharge flow path.

6. The ballast water treatment apparatus according to any one of Claims 1 to 3, wherein the reverse cleaning mechanism is a mechanism that is capable of supplying the cleaning water to the inside of the pleated filter at a pressure of 0.1 MPa or more and 1 MPa or less.

7. The ballast water treatment apparatus according to Claim 1, wherein the case further includes therein an inlet through which a cleaning chemical for cleaning the pleated filter is poured.

8. A reverse cleaning method for a ballast water treatment apparatus, the reverse cleaning method being used for a ballast water treatment apparatus having a structure in which a cylindrical pleated filter that is rotatably held about an axis of a cylinder is used as a filtration film, and in a state of a filtering operation, untreated water is filtered from an outer circumferential surface side of the pleated filter toward an inner side of the cylinder, the reverse cleaning method comprising:
in a state where the filtering operation is stopped and the pleated filter is rotated, supplying pressurized cleaning water to the inner side of the cylinder of the pleated filter; and permeating the cleaning water from the inner side of the cylinder of the pleated filter toward the outer circumferential surface side of the pleated filter.

9. The reverse cleaning method for a ballast water treatment apparatus according to Claim 8, wherein the cleaning water is intermittently supplied, and
relationships of B ≥ A × 1 and 0.5 ≤ C ≤ 10
are satisfied where A represents an effective filter area (m²) of the pleated filter, B represents an amount (m³) of cleaning water that is allowed to flow at one time, and C represents a time (sec) during which the cleaning water flows at the one time.

10. The reverse cleaning method for a ballast water treatment apparatus according to Claim 8 or 9, wherein the cleaning water is pressurized at a pressure of 0.1 MPa or more and 1 MPa or less.

11. A reverse cleaning method for a ballast water treatment apparatus, comprising: before the reverse cleaning method according to Claim 8 is performed, conducting chemical cleaning by immersing the pleated filter in a cleaning chemical for a certain period of time.
